# EUROPEAN PATENT SPECIFICATION

(11) **EP 2 754 546 B1**
(45) Date of publication and mention of the grant of the patent: **19.07.2017**
(21) Application number: 13150926.7
(22) Date of filing: 11.01.2013
(51) Int. Cl.: B29C 65/64, B23K 20/233, B23K 20/10, B29L 31/30, B23K 103/14, B23K 103/16, B23K 103/18, B29C 65/08

(54) **Joining of titanium and titanium alloys to carbon fibres and carbon-fibre reinforced polymer components by ultrasonic welding**
Verbindung von Titan und Titanlegierungen an Kohlenstofffasern und kohlenstofffaserverstärkten Polymerkomponenten durch Ultraschallschweißen
Assemblage de titane et d'alliages de titane avec des fibres de carbone et des composants polymères renforcés de fibres de carbone par soudage ultrasonique

(43) Date of publication of application: 16.07.2014
(73) Proprietor: Airbus Operations GmbH, 21129 Hamburg (DE)
(72) Inventor: Syassen, Freerk, 26936 Stadland (DE); Born, Johannes, 28201 Bremen (DE); Balle, Frank, 67663 Kaiserslautern (DE)
(74) Representative: Isarpatent

(56) References cited:
- DE-A1-102009 023 717
- DE-A1-102011 051 301
- US-A1- 2010 181 368

## Description

### Field of the invention

The present invention pertains to a method for ultrasonic welding of titanium or titanium alloys with carbon fibres and carbon-fibre reinforced polymer (CFRP) components, particularly to be used for welding of fuselage structural elements, functional elements or cabin interior of an aircraft or spacecraft.

### Background of the invention

Contemporary airborne vehicles such as aircraft or spacecraft contain joints of titanium or titanium alloy components with CFRP components. In order to reliably interconnect those components, historically established joining procedures such as riveting, bolting or gluing have been used hitherto.

For example, document DE 69 836 259 T2 discloses composite components from aluminium and CFRP components glued together by means of an adhesive layer.

Alternatively, bolted or riveted joints may be formed by perforating both components to be joined, placing fixation means in the holes and interlocking the fixation means with the components.

Document Krenkel, W. (ed.): "Verbundwerkstoffe", John Wiley & Sons, 2009, p. 549-553 discloses ultrasonic welding procedures for welding aluminum alloy and CFRP components.

Document US 2011/0031350 A1 discloses a component for building a fuselage section of an aircraft, the component having alternating light metal and CFRP sheets being baked together by a thermal joining process.

Document US 2010/0181368 A1 discloses a ultrasonic welding method for welding a titanium golf club head to a graphite golf club shaft.

Document DE 10 2011 051 301 A1 discloses a method for clinching a metal component with a plastic component which additionally includes locally plastifying the plastics component around the clinching spot by means of ultrasonic excitation.

### Summary of the invention

It is therefore the object of the present invention to provide a method for interconnecting titanium and CFRP components which is flexible, time-efficient, reliable, automated and low-cost while at the same time offering a light-weight and low maintenance permanent joint between titanium based parts and CFRP based parts.

This problem is solved by a method having the technical features of claim 1.

According to an aspect of the present invention, a method for ultrasonic welding of a titanium based component to a carbon-fibre reinforced plastic, CFRP, component for use in aircraft or spacecraft comprises overlapping a first sheet component with a second sheet component at an overlap region, the first sheet component comprising CRFP and the second sheet component comprising titanium or a titanium alloy, placing the overlap region between an anvil and a sonotrode of an ultrasonic welding apparatus, exciting the sonotrode with ultrasonic oscillation parallel to the surface of the second sheet component, while exerting a predeterminable clamping force on the sonotrode perpendicular to the second sheet component, and creating a welding joint between the first sheet component and the second sheet component at the overlap region by maintaining the ultrasonic oscillations and the clamping force for a predeterminable time span, wherein carbon fibres are pushed out of a matrix of the CRFP component, so carbon fibres are directly joined to a metal of the titanium based component.

### Embodiments of the invention

One main idea of the present invention is to use an ultrasonic welding process for titanium based components in order to permanently join them to CFRP or CFRP based components.

One advantage of such a method is that lock bolts or rivets can be avoided. Several advantages ensue from this: It will not be necessary to drill holes into the components to be joined, thereby avoiding damage and disruption to the load bearing fibres of the CFRP component. Moreover, bolting process are complicated to automate, thus the welding method can be conducted faster and with higher precision. Finally, by avoiding fixation means, costs for the bolts or rivets as well as system weight may be advantageously reduced.

Ultrasonic welding joints are applicable to hard to reach locations where the application of bolts or rivets is not possible. Particularly, the application of bolts or rivets requires access to both sides of the joint area of the components, whereas the ultrasonic welding method only requires access to one side.

Since the ultrasonic welding method creates a direct metal/fibre contact capable of conducting electrical current, structural health monitoring may be easily implemented during and after the manufacturing process. Additionally, the welded bonds provide for high resistance to shear forces and corrosion, ensuring an improved durability and suitability for use in aircraft or spacecraft.

The dependent claims provide additional technical features of advantageous embodiments and further improvements of the invention.

According to an embodiment of the method, exciting the sonotrode comprises generating a standing wave having a predeterminable maximum oscillation amplitude at the sonotrode tip.

According to a further embodiment of the method, the predeterminable time span, the predeterminable clamping force and/or the frequency of the ultrasonic oscillations are chosen to evoke a plastification or a partial plastic deformation of the second sheet component in the overlap region.

According to a further embodiment of the method, the predeterminable time span has a duration between 3 and 15 seconds.

According to a further embodiment of the method, the thickness of the first sheet component lies between 0.5 mm and 3 mm, and preferably is 2 mm.

According to a further embodiment of the method, the thickness of the second sheet component lies between 0.4 mm and 1.2 mm, and preferably is 0.8 mm.

According to a further embodiment of the method, the welding joint region covers an area between 10 mm² and 250 mm².

According to a further embodiment of the method, the first sheet component comprises carbon-fibre reinforced polyether ether ketone, CF-PEEK, or carbon-fibre reinforced polyphenylene sulphide, CF-PPS.

According to a further embodiment of the method, the second sheet component comprises cp-Titanium, TiAl6V4 or TiAl3V2.5.

According to a further embodiment of the method, the first sheet component comprises a C-textile Satin fabric (Atlas¼ weave).

The invention will be explained in greater detail with reference to exemplary embodiments depicted in the drawings as appended.

### Brief description of the drawings

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: shows a schematical illustration of a welding joint of a titanium based component and a CFRP based component according to an embodiment of the invention.
- Fig. 2: shows a further schematical illustration of a welding joint of a titanium based component and a CFRP based component according to an embodiment of the invention.
- Fig. 3: shows a schematical illustration of a system for ultrasonic welding according to yet another embodiment of the invention.
- Fig. 4: shows a method for ultrasonic welding of a titanium based component and a CFRP based component according to yet another embodiment of the invention.

### Detailed description of the embodiments

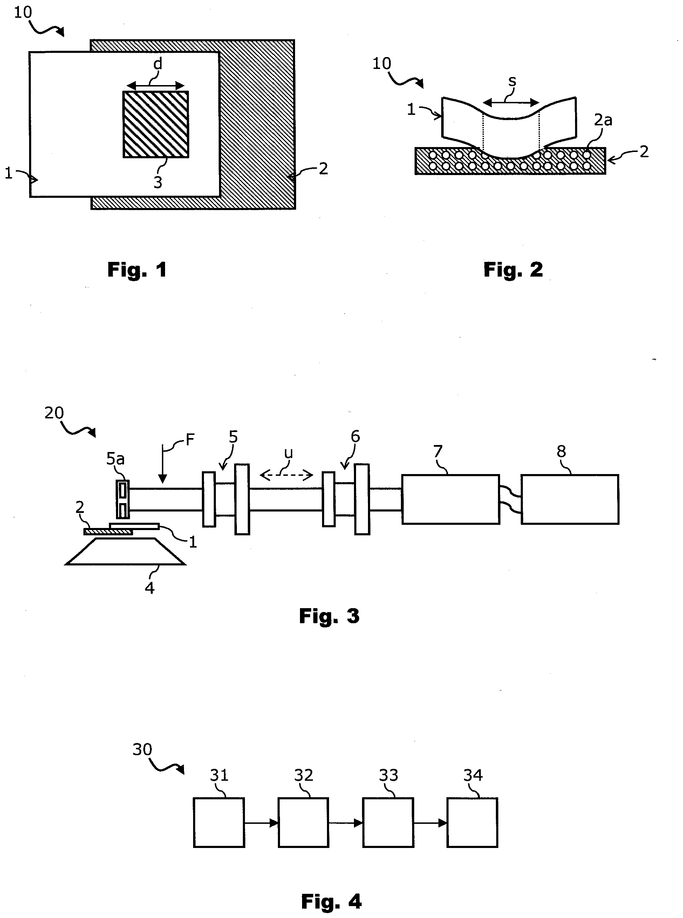

Fig. 1 shows a schematical illustration of a welding joint 10 of a titanium based component 1 and a CFRP based component 2. The CFRP based component 2 may for example comprise carbon-fibre reinforced polyether ether ketone, CF-PEEK, or carbon-fibre reinforced polyphenylene sulphide, CF-PPS. Moreover, the CFRP based component 2 may be woven in Satin fabric (Atlas¼ weaving style). The titanium based component 2 may comprise titanium like cp-titanium grade 2 or a titanium alloy, for example TiAl6V4 or TiAl3V2.5.

The CFRP based component 2 overlaps the titanium based component 1 at an overlap region, which may for example have an extension of 10 to 250 mm², depending on the dimensions of the components 1 and 2. The CFRP based component 2 and the titanium based component 1 may be sheet-like structures, i.e. generally flat foils which extend along a sheet surface. The thickness of the CFRP based component 2 may for example lie between 0.5 mm and 3 mm. For example, the thickness of the CFRP based component 2 may be 2 mm. The thickness of the titanium based component 1 may lie between 0.4 mm and 1.2 mm, For example, the thickness of the titanium based component 1 may be 0.8 mm.

Within the overlap region the welding joint region 3 is located, which may cover an area between 10 mm² and 250 mm², for example 100 mm². The welding joint region 3 may for example be rectangular with a typical dimension d of about 10 mm; however, other dimensions and shapes of the welding joint region 3 may be possible as well.

Fig. 2 schematically shows the overlap region of the titanium based component 1 and the CFRP based component 2 in cross section. The welding joint region is referred to as region s where the sonotrode tip contacts the titanium based component 1.

The titanium based component 1 plastifies or at least partly plastifies during the welding process and intrudes at least partly into the CFRP based component 2 which may comprise a plurality of carbon fibres 2a. The carbon fibres 2a are thereby pushed out of the matrix and are directly joined to the metal of the titanium based component 1.

Fig. 3 schematically illustrates an ultrasonic welding apparatus 20 used for welding a titanium based component 1 to a CFRP based component 2. The titanium based component 1 and the CFRP based component 2 are placed on an anvil or nest 4, upon which a sonotrode 5 having a sonotrode tip 5a is arranged. The sonotrode 5 is connected to a booster element 6 which in turn is connected to an piezo-electric converter 7. The electric converter 7 is powered by a frequency generator 8 which controls the electric converter to generate mechanical vibrations or oscillations u. These vibrations or oscillations u may be aligned substantially parallel to the axis of the booster element 6 and the sonotrode 5, thereby causing the sonotrode 5 to be periodically displaced parallel to the surface of the titanium based component 1. The frequency of the vibrations or oscillations u may for example be between 10 kHz and 100 kHz.

By applying a clamping or contacting force F substantially perpendicular to the axis of the sonotrode 5 and substantially perpendicular to the surface of the titanium based component 1, the sonotrode tip 5a is pushed onto the surface of the titanium based component 1 while creating a relative motion due to the on-going vibrations or oscillations u. By controlling the duration of maintenance of the vibrations or oscillations u as well as the clamping force F and/or the value of the clamping force F and the frequency of the vibrations or oscillations u, the temperature at the contact region s may be controlled so that the titanium based component 1 only plastifies or partly plastifies and a hybrid joint in the solid state occurs.

Fig. 4 schematically illustrates a method 30 for ultrasonic welding of a titanium based component and a CFRP based component such as the titanium based component 1 and the CFRP based component 2 as exemplarily explained in conjunction with Figs. 1 and 2. The method 30 may for example be executed using an ultrasonic welding system 20 as exemplarily shown in Fig. 3. The method 30 may for example be used to weld titanium based stringers, formers or similar fuselage structural elements to CFRP based elements such as fixation clips or connection profiles of the fuselage of an aircraft or spacecraft.

In a first step 31, a first sheet component, such as the CFRP based component 2, is overlapped with a second sheet component, such as the titanium based component 1, at an overlap region. The overlap region is placed in a second step 32 between an anvil 4 and a sonotrode 5 of an ultrasonic welding apparatus 20.

In a third step 33, the sonotrode 5 is excited with ultrasonic vibrations or oscillations u parallel to the surface of the second sheet component, while exerting a predeterminable clamping force F on the sonotrode 5 perpendicular to the second sheet component 1. By maintaining the ultrasonic vibrations or oscillations u and the clamping force F for a predeterminable time span, in a fourth step 34 a welding joint region 3 is created between the first sheet component and the second sheet component at the overlap region.

The sonotrode 5 may be excited by generating a standing wave having a predeterminable maximum oscillation amplitude at the sonotrode tip 5a. Influence parameters for the welding process may involve the duration of the predeterminable time span, the value of the predeterminable clamping force F and/or the frequency of the ultrasonic oscillation u. By varying those parameters in an appropriate manner, a plastification or a partial plastification of the second sheet component in the overlap region can be achieved. Due to this plastification the first sheet component is at least partially pressed into the CFRP material, thus displacing the plastic from the welding joint region 3. The CFRP of the second sheet component is molten and the carbon-fibres are at least partly pushed out of the matrix without suffering major damage. This directly joins the carbon-fibres to the metal of the first sheet component, thereby creating a welding joint having high stability against tensile shear stress.

The welding process according to the method 30 has short duration, for example between 3 and 15 seconds, enabling a high throughput rate for welding components with minimum energy requirements. Additionally, the welding process can be performed below the melting temperature of the titanium based component, thus ensuring very good process control. The welding process does advantageously not create any sparks, exhausts or combustion, rendering it very eco-friendly. Different hybrid combinations of the used materials are all weldable using the same welding process, possibly only with variations of the process parameters.

Welded components having been welded using the method 30 may for example be used in aircraft or spacecraft, for example when connecting titanium based stringers or formers to the hull structure of an aircraft or spacecraft by means of CFRP based connection clips. Such titanium based stringers or formers may preferably be employed in fuselage regions requiring high crash reliability.

### List of Reference Signs

- 1: Titanium based component
- 2: CFRP based component
- 2a: Carbon fibre
- 3: Welding joint region
- 4: Anvil
- 5: Sonotrode
- 5a: Sonotrode tip
- 6: Booster
- 7: Piezo-Electric converter
- 8: Frequency generator
- 10: Welding joint
- 20: Ultrasonic welding apparatus
- 30: Method
- 31: Method step
- 32: Method step
- 33: Method step
- 34: Method step
- d: Welding joint region size
- F: Clamping force
- s: Sonotrode contact region
- u: Sonotrode vibration direction

## Claims

1. A method (30) for ultrasonic welding of a titanium based component to a carbon-fibre reinforced plastic, CFRP, component for use in aircraft or spacecraft, comprising:
overlapping (31) a first sheet component (2) with a second sheet component at an overlap region, the first sheet component (2) comprising CRFP and the second sheet component (1) comprising titanium or a titanium alloy;
placing (32) the overlap region between an anvil (4) and a sonotrode (5) of an ultrasonic welding apparatus (20);
exciting (33) the sonotrode (5) with ultrasonic vibrations (u) parallel to the surface of the second sheet component (1), while exerting a predeterminable clamping force (F) on the sonotrode (5) perpendicular to the second sheet component (1); and
creating (34) a welding joint region (3) between the first sheet component (2) and the second sheet component (1) at the overlap region by maintaining the ultrasonic vibrations (u) and the clamping force (F) for a predeterminable time span,
wherein carbon fibres (2a) are pushed out of a matrix of the CRFP component (2), so carbon fibres (2a) are directly joined to a metal of the titanium based component (1).

2. The method (30) of claim 1, wherein exciting (33) the sonotrode (5) comprises generating a standing wave having a predeterminable maximum oscillation amplitude at the sonotrode tip (5a).

3. The method (30) of one of the claims 1 and 2, wherein the predeterminable time span, the predeterminable clamping force (F) and/or the frequency of the ultrasonic vibrations (u) are chosen to evoke a plastification or a partial plastic deformation of the second sheet component (1) in the overlap region.

4. The method (30) of claim 3, wherein the predeterminable time span has a duration between 3 and 15 seconds.

5. The method (30) of one of the claims 1 to 4, wherein the thickness of the first sheet component (2) lies between 0.5 mm and 3 mm, and preferably is 2 mm.

6. The method (30) of one of the claims 1 to 5, wherein the thickness of the second sheet component (1) lies between 0.4 mm and 1.2 mm, and preferably is 0.8 mm.

7. The method (30) of one of the claims 1 to 6, wherein the welding joint region (3) covers an area between 10 mm² and 250 mm².

8. The method (30) of one of the claims 1 to 7, wherein the first sheet component (2) comprises carbon-fibre reinforced polyether ether ketone, CF-PEEK, or carbon-fibre reinforced polyphenylene sulphide, CF-PPS.

9. The method (30) of one of the claims 1 to 8, wherein the second sheet component (1) comprises cp-Titanium, TiAl6V4 or TiAl3V2.5.

10. The method (30) of one of the claims 1 to 9, wherein the first sheet component (2) comprises a Satin fabric.

## Patentansprüche

1. Verfahren (30) zum Ultraschallschweißen einer auf Titan basierenden Komponente an eine kohlenstofffaserverstärkte Kunststoffkomponente, CFRP-Komponente, zur Verwendung in einem Flugzeug oder einem Raumfahrzeug, umfassend:
Überlappen (31) einer ersten Lagenkomponente (2) mit einer zweiten Lagenkomponente an einem Überlappungsbereich, wobei die erste Lagenkomponente (2) CRFP enthält und die zweite Lagenkomponente (1) Titan oder eine Titanlegierung enthält;
Anordnen (32) des Überlappungsbereichs zwischen einem Amboss (4) und einer Sonotrode (5) eines Ultraschallschweißgerätes (20);
Anregen (33) der Sonotrode (5) mit Ultraschallschwingungen (u) parallel zu der Oberfläche der zweiten Lagenkomponente (1), während eine vorbestimmte Klemmkraft (F) auf der Sonotrode (5) senkrecht zur zweiten Lagenkomponente (1) ausgeübt wird;
und
Erzeugen (34) eines Schweißverbindungsbereichs (3) zwischen der ersten Lagenkomponente (2) und der zweiten Lagenkomponente (1) am Überlappungsbereich durch das Beibehalten der Ultraschallschwingungen (u) und der Klemmkraft (F) für eine vorbestimmte Zeitspanne,
wobei die Kohlenstofffasern (2a) aus einer Matrix der CRFP-Komponente (2) gedrückt werden, so, dass Kohlenstofffasern (2a) direkt mit einem Metall der auf Titan basierenden Komponente (1) verbunden werden.

2. Verfahren (30) nach Anspruch 1, wobei das Anregen (33) der Sonotrode (5) die Erzeugung einer Stehwelle umfasst, die eine vorbestimmte maximale Oszillierungsamplitude an der Sonotrodenspitze (5a) hat.

3. Verfahren (30) nach einem der Ansprüche 1 und 2, wobei die vorbestimmte Zeitspanne, die vorbestimmte Klemmkraft (F) und/oder die Frequenz der Ultraschallschwingungen (u) so ausgewählt werden, dass eine Plastifizierung oder eine teilweise plastische Verformung der zweiten Lagenkomponente (1) im Überlappungsbereich verursacht wird.

4. Verfahren (30) nach Anspruch 3, wobei die vorbestimmte Zeitspanne eine Dauer zwischen 3 und 15 Sekunden aufweist.

5. Verfahren (30) nach einem der Ansprüche 1 bis 4, wobei die Dicke der ersten Lagenkomponente (2) zwischen 0,5 mm und 3 mm liegt und bevorzugt 2 mm beträgt.

6. Verfahren (30) nach einem der Ansprüche 1 bis 5, wobei die Dicke der zweiten Lagenkomponente (1) zwischen 0,4 mm und 1,2 mm liegt und bevorzugt 0,8 mm beträgt.

7. Verfahren (30) nach einem der Ansprüche 1 bis 6, wobei der Schweißverbindungsbereich (3) einen Bereich zwischen 10 mm² und 250 mm² abdeckt.

8. Verfahren (30) nach einem der Ansprüche 1 bis 7, wobei die erste Lagenkomponente (2) ein kohlenstofffaserverstärktes Polyetheretherketon, CF-PEEK, oder Kohlenstoffaser-verstärktes Polyphenylensulfid, CF-PPS, enthält.

9. Verfahren (30) nach einem der Ansprüche 1 bis 8, wobei die zweite Lagenkomponente (1) cp-Titan, TiA16V4 oder TiA13V2,5 enthält.

10. Verfahren (30) nach einem der Ansprüche 1 bis 9, wobei die erste Lagenkomponente (2) ein Satingewebe enthält.

## Revendications

1. Procédé (30) de soudure par ultrasons d'un composant à base de titane sur un plastique renforcé de fibres de carbone, CFRP, composant pour une utilisation dans les aéronefs ou dans les engins spatiaux , comprenant :
le chevauchement (31) d'un premier composant en feuille (2) par un second composant en feuille dans une zone de chevauchement, le premier composant en feuille (2) comprenant le CFRP et le second composant en feuille (1) comprenant du titane ou un alliage de titane ;
la mise en place (32) de la zone de chevauchement entre une enclume (4) et une sonotrode (5) d'un appareillage de soudure par ultrasons (20) ;
l'excitation (33) de la sonotrode (5) par des vibrations ultrasoniques (u) parallèles à la surface du second composant en feuille (1), tout en exerçant une force de serrage (F) pouvant être prédéterminée sur la sonotrode (5) perpendiculaire au second composant en feuille (1) ; et
la création (34) d'une zone de joint de soudure (3) entre le premier composant en feuille (2) et le second composant en feuille (1) au niveau de la zone de chevauchement en maintenant les vibrations ultrasoniques (u) et la force de serrage (F) pendant un laps de temps pouvant être prédéterminé,
dans lequel les fibres de carbone (2a) sont poussées hors d'une matrice du composant CFRP (2), ainsi, les fibres de carbone (2a) sont directement liées à un métal du composant à base de titane (1).

2. Procédé (30) selon la revendication 1, dans lequel l'excitation (33) de la sonotrode (5) comprend la génération d'une onde stationnaire ayant une amplitude maximale d'oscillation pouvant être prédéterminée à la pointe de la sonotrode (5a).

3. Procédé (30) selon l'une quelconque des revendications 1 et 2, dans lequel le laps de temps pouvant être prédéterminé, la force de serrage (F) pouvant être prédéterminée et/ou la fréquence des vibrations ultrasoniques (u) sont choisis pour provoquer une plastification ou une déformation plastique partielle du second composant en feuille (1) dans la zone de chevauchement.

4. Procédé (30) selon la revendication 3, dans lequel le laps de temps pouvant être prédéterminé dure entre 3 et 15 secondes.

5. Procédé (30) selon l'une quelconque des revendications 1 à 4, dans lequel l'épaisseur du premier composant en feuille (2) se situe entre 0,5 mm et 3 mm, et est de préférence de 2 mm.

6. Procédé (30) selon l'une quelconque des revendications 1 à 5, dans lequel l'épaisseur du second composant en feuille (1) se situe entre 0,4 mm et 1,2 mm, et est de préférence de 0,8 mm.

7. Procédé (30) selon l'une quelconque des revendications 1 à 6, dans lequel la zone du joint de soudure (3) recouvre une surface entre 10 mm² et 250 mm².

8. Procédé (30) selon l'une quelconque des revendications 1 à 7, dans lequel le premier composant en feuille (2) comprend un polyéther éther cétone renforcé de fibres de carbone, du CF-PEEK, ou du sulfure de polyéthylène renforcé de fibres de carbone, du CF-PPS.

9. Procédé (30) selon l'une quelconque des revendications 1 à 8, dans lequel le second composant en feuille (1) comprend du titane commercialement pur, du TiA16V4 ou du TiA13V2.5.

10. Procédé (30) selon l'une quelconque des revendications 1 à 9, dans lequel le premier composant en feuille (2) comprend un tissu de satin.
